# FASCICULE DE BREVET EUROPEEN

(11) **EP 0 965 072 B1**
(45) Date de publication et mention de la délivrance du brevet: **12.02.2003**
(21) Numéro de dépôt: 98910798.2
(22) Date de dépôt: 20.02.1998
(51) Int. Cl.: G05B 23/02

(54) **ARCHITECTURE MODULAIRE DE PILOTAGE D'UN AERODYNE PRESENTANT UN FAIBLE COUT TOUT EN ETANT APTE A ASSURER UN NIVEAU ELEVE DE SECURITE DE FONCTIONNEMENT**
KOSTENGÜNSTIGE MODULARE ARCHITEKTUR ZUR STEUERUNG EINES AUF EINEM HOHEN SICHERHEITSNIVEAU BETRIEBENEN FLUGZEUGS
LOW COST MODULAR ARCHITECTURE FOR PILOTING AN AERODYNE OPERATING WITH HIGH LEVEL OF SECURITY

(30) Priorité: 25.02.1997 FR 9702210
(43) Date de publication de la demande: 22.12.1999
(73) Titulaire: THALES AVIONICS S.A., 78141 Vélizy Villacoublay Cédex (FR)
(72) Inventeur: LOISE, Dominique, Thomson-CSF S.C.P.I., F-94117 Arcueil Cedex (FR); LEDOUX, Jean-Pierre, Thomson-CSF S.C.P.I., F-94117 Arcueil Cedex (FR); SARDIER, Patrick, Thomson-CSF S.C.P.I., F-94117 Arcueil Cedex (FR)
(74) Mandataire: Beylot, Jacques
(86) Numéro de dépôt international: FR9800335
(87) Numéro de publication internationale: WO98038553

(56) Documents cités:
- EP-A- 0 482 526
- EP-A- 0 532 045
- EP-A- 0 652 689
- DE-A- 3 732 334
- GB-A- 2 238 650
- US-A- 4 155 116
- US-A- 4 400 694
- US-A- 4 421 716

## Description

La présente invention concerne une architecture modulaire d'un ensemble d'équipements électroniques permettant de piloter un processus industriel qui nécessite un niveau élevé de sécurité de fonctionnement.

Elle s'applique notamment, mais non exclusivement, aux équipements électroniques embarqués à bord des aérodynes qui assurent différentes fonctions de conduite de vol. Il s'avère que les développements en cours de ces équipements visent à automatiser de plus en plus les tâches de conduite de vol, et en particulier, le pilotage des l'aérodynes. Cette tendance conduit à des équipements de plus en plus complexes, encombrants, consommateurs d'énergie, coûteux, et difficiles à maintenir.

Pour résoudre ce problème, on a cherché à intégrer et à rendre modulaires ces équipements. Pour cela, on a déjà proposé une architecture qui rassemble différents modules électroniques dans des baies ou des armoires électroniques, ces modules effectuant l'acquisition des informations issues des capteurs et des autres équipements embarqués, ainsi que l'élaboration de commandes de vol.

On a par ailleurs tenté de regrouper et de partager plusieurs fonctionnalités au sein d'un même module, les calculs et traitements nécessaires pouvant être effectués au moyen d'un même processeur utilisé en temps partagé.

Or, dans les équipements embarqués à bord des aérodynes, on associe généralement un niveau de criticité à chaque fonction réalisée et chaque donnée utilisée par les fonctions, chaque niveau de criticité correspondant à un taux de panne maximum requis par les autorités de certification des équipements aéronautiques. Ainsi, les fonctions de niveau le plus critique correspondent aux fonctions dont la défaillance peut avoir des conséquences catastrophiques. Ces fonctions doivent donc présenter une très faible probabilité de défaillance (inférieure à 10⁻⁹ panne par heure de vol). De même, les données les plus critiques sont les données qui, si elles ne sont plus disponibles ou erronées, peuvent entraîner des événements catastrophiques.
Bien entendu, la criticité des données n'est pas en relation avec la criticité des fonctions qui les utilisent, une même donnée pouvant être utilisée par plusieurs fonctions de niveaux de criticité différents.

Le partage d'un même processeur par plusieurs fonctions implique donc que des fonctions de niveaux de criticité différents sont exécutées par un même processeur, ce qui accroît d'une manière importante le risque que des fonctions moins critiques, comme les fonctions liées à la maintenance des équipements, perturbent, voire bloquent l'exécution de fonctions les plus critiques, c'est-à-dire, dont un dysfonctionnement peut conduire à une situation catastrophique. Il est alors nécessaire de prendre des dispositions particulières pour que les fonctions réalisées, et en particulier les plus critiques, soient exécutées avec un niveau de sécurité requis par les autorités de certification des équipements embarqués.

A cet effet, on a proposé une architecture redondante, où tous les modules, en particulier ceux qui assurent des fonctions critiques, sont triplés de manière à ce que les fonctions critiques puissent être réalisées même à la suite d'une défaillance. Cependant, cette solution présente peu d'intérêt dans une optique de réduction des coûts, du nombre de modules nécessaires, de la puissance consommée et dissipée, de la disponibilité (taux de pannes) et des facilités de maintenance des équipements.

En outre, la solution de l'architecture redondante revient à dupliquer non seulement des fonctions critiques, mais aussi des fonctions non critiques, comme les fonctions de maintenance.

La présente invention a pour but de supprimer ces inconvénients. A cet effet, elle propose une architecture modulaire d'équipements électroniques pour le pilotage d'un processus industriel, comprenant, d'une part, des réceptacles contenant des modules de concentration de données et des modules de traitement alimentés en énergie par des modules d'alimentation, et d'autre part, des dispositifs d'affichage critiques, l'ensemble étant interconnecté par l'intermédiaire de moyens de transmission de données à des capteurs critiques, des capteurs non critiques et des actionneurs.

Selon l'invention, cette architecture est caractérisée en ce que les capteurs critiques transmettent directement leurs informations critiques aux dispositifs d'affichage critique d'une part, et d'autre part aux modules de concentration et de traitement des réceptacles, les modules de concentration élaborant, à partir des données des capteurs critiques et non critiques, des données non critiques à destination des dispositifs d'affichage et des modules de traitement par l'intermédiaire d'un bus numérique série multi-récepteur, les modules de traitement élaborant des ordres à destination des actionneurs à partir des données des capteurs critiques et des données non critiques issues des modules de concentration.

La distribution des données critiques à l'ensemble des éléments de l'architecture se fait à l'aide de bus individuels. L'absence de concentration des données critiques sur un bus unique évite que l'ensemble de l'équipement soit hors service en cas de défaillance d'un seul bus. Cette architecture permet donc le confinement des pannes au seul module affecté en évitant leur propagation. Il n'est donc plus nécessaire d'utiliser une architecture totalement doublée ou triplée, seules les fonctions critiques étant doublées ou triplées.
L'invention permet ainsi de réduire notablement le coût, l'encombrement et la puissance dissipée d'un tel équipement.
Par ailleurs, comme les pannes sont confinées au seul module affecté, la maintenance de l'équipement, et en particulier les opérations de localisation de panne et de réparation, se trouve facilitée d'une manière importante.

Avantageusement, les dispositifs d'affichage comprennent des moyens de traitement pour assurer la visualisation des données qui leur sont transmises en provenance des capteurs, des instruments de mesure ou d'autres équipements.

De cette manière, les dispositifs d'affichage peuvent fournir directement toutes les informations sur la conduite du processus, et en particulier, les informations critiques, indépendamment de la disponibilité des modules de traitement.

Selon une particularité de l'invention, chaque module de traitement et de concentration des données comprend une carte de traitement identique, munie d'un processeur, et une carte d'entrée / sortie assurant la connexion de la carte de traitement avec les entrées et les sorties du module, la carte de traitement comprenant une mémoire dans laquelle est chargé le programme permettant de piloter le processeur afin d'assurer la fonction du module.

Cette disposition permet, par un effet d'échelle, de réduire de façon importante les coûts de conception et de fabrication des modules et d'en faciliter la maintenance. En effet, lorsqu'une carte de traitement d'un module est défaillant, elle peut ainsi être remplacée directement sur l'aérodyne, par une autre carte de traitement dans laquelle on aura préalablement chargé le programme correspondant aux fonctions du module.

Ces équipements réalisent par exemple les fonctions de pilotage automatique d'un aérodyne, de protection contre le décrochage, de concentration des données et de maintenance centralisée.

Un mode de réalisation du dispositif selon l'invention sera décrit ci-après, à titre d'exemple non limitatif, avec référence aux dessins annexés dans lesquels :
La figure 1 représente schématiquement une architecture selon l'invention d'un ensemble d'équipements électroniques embarqués à bord d'un aérodyne ;
La figure 2 montre en détail un équipement montré sur la figure 1, rassemblant plusieurs modules ;
La figure 3 montre plus en détail un exemple de module selon l'invention ;
La figure 4 montre une unité de traitement d'un module selon l'invention ;
La figure 5 montre un module d'alimentation selon l'invention ;
La figure 6 montre un module d'alimentation selon l'invention ;
La figure 7 illustre le fonctionnement d'une unité de traitement ;
La figure 8 représente l'organisation d'une partie de la mémoire d'une unité de traitement ;
La figure 9 illustre la répartition de l'utilisation du processeur en tranches de temps cycliques ;
La figure 10 illustre l'organisation de la maintenance des différents éléments de l'architecture représentée à la figure 1.

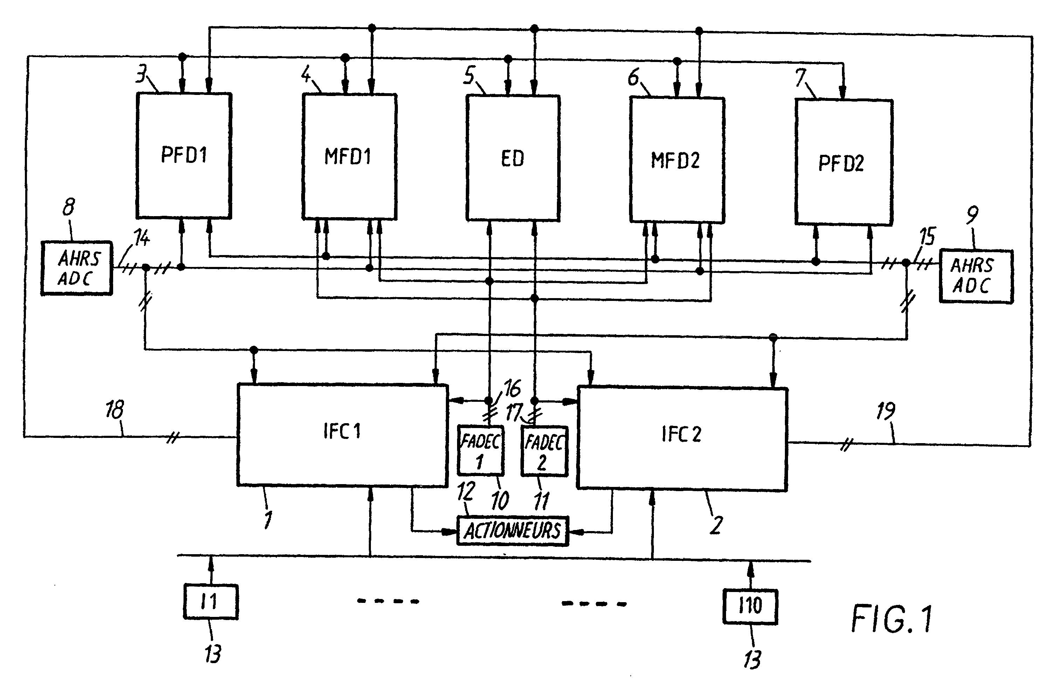

L'architecture d'équipements électroniques embarqués, représentée sur la figure 1 permet d'assurer le pilotage automatique d'un aérodyne, la protection contre le décrochage, la concentration des données et la maintenance centralisée de ces équipements. A cet effet, elle comprend cinq dispositifs de visualisation critique 3 à 7, deux réceptacles 1, 2 contenant deux ensembles modulaires de traitement identiques IFC1 et IFC2 (Integrated Flight Cabinet), deux systèmes de référence primaires 8, 9 qui sont des capteurs délivrant des données critiques et qui comportent, chacun par exemple une centrale d'attitude AHRS (Attitude Heading Reference System) et système ADC d'acquisition et de traitement de données relatives à l'air extérieur (Air Data Computer), permettant l'acquisition de paramètres de vol à court terme, deux dispositifs de mesure des paramètres des moteurs FADEC1 et FADEC2 (Full Authority Digital Engine Computer), 10, 11, un ensemble d'actionneurs 12 et une pluralité d'équipements périphériques I1 à I10 13, délivrant des données non critiques tels que des capteurs, des instruments de mesure, de communication, de signalisation d'alarmes.

Chacun des dispositifs de visualisation critique 3 à 7 comprend un écran de visualisation, une interface d'acquisition de données, des moyens de traitement de ces données et en particulier des moyens qui élaborent les symbologies spécifiques à chaque donnée à afficher. Les deux écrans PFD1 et PFD2 3, 7, sont dédiés à l'affichage des données de vol, l'écran ED à l'affichage des paramètres de fonctionnement des moteurs, et les deux écrans MFD1 et MFD2 dits "multifonctions" permettant l'affichage des autres paramètres utiles à la conduite du vol.

Les données critiques pour la sécurité du vol, comme celles issues des systèmes de référence primaires 8 et 9, sont transmises directement par des liaisons numériques séries 14, 15 spécifiques, individuelles, aux dispositifs de visualisation critique 3, 4, 6, 7 qui assurent leur affichage et aux réceptacles 1, 2 des ensembles de traitement. De même les données critiques provenant des dispositifs 10, 11 de mesure des paramètres des moteurs sont transmises par des liaisons séries individuelles 16, 17 aux dispositifs de visualisation critiques 4 à 6 et aux réceptacles 1, 2 des ensembles de traitements.

Par ailleurs, les autres données, non critiques, échangées par les réceptacles 1, 2 des ensembles de traitement et affichées par les dispositifs de visualisation 3 à 7 sont transmises sous forme multiplexée par des bus série 18, 19, par exemple de type ARINC 429 qui assurent la distribution des informations aux modules, de manière redondante, avec une sécurité adaptée aux besoins, et ce pour un coût réduit grâce à l'utilisation de composants de traitement identiques. En outre, ces bus pexmettent à un émetteur de s'adresser à plusieurs récepteurs, la panne d'un récepteur n'empêchant pas la réception par les autres récepteurs.

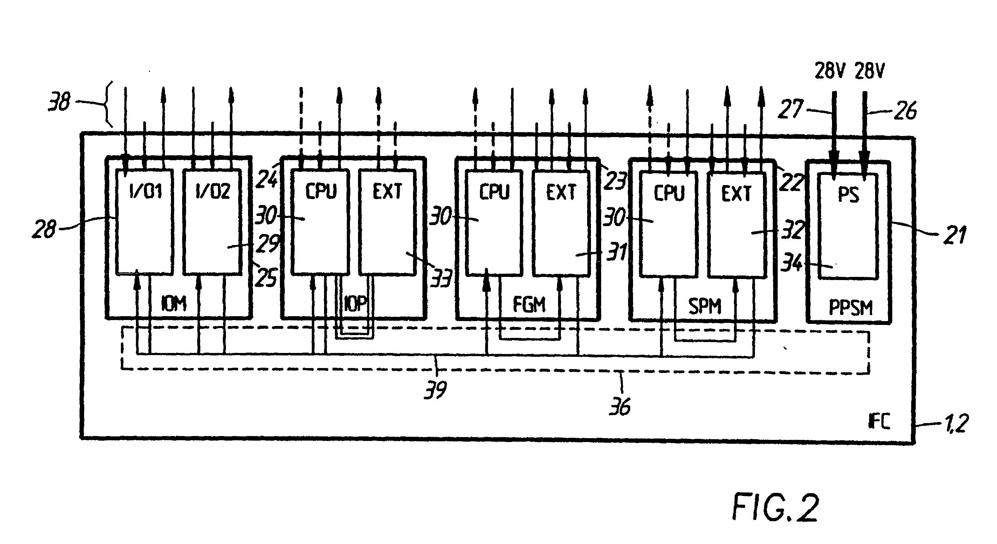

Tel que représenté sur la figure 2, les réceptacles 1, 2 des ensembles de traitement se présentent sous la forme de baies électroniques dans lesquelles sont insérés et interconnectés une pluralité de modules 21 à 25. Chaque ensemble de traitement 1, 2 comprend un module IOM 25 chargé de gérer les entrées et sorties de données analogiques et discrètes, non critiques, un module IOP 24 chargé de concentrer les données numériques non critiques, un module FGM 23 chargé du traitement des données critiques liées au pilotage automatique, et un module SPM 22 chargé d'assurer la fonction de prévention des risques de décrochage.

Afin d'assurer la distribution des alimentations au moindre coût, chaque ensemble de traitement 1, 2 comprend un module d'alimentation primaire PPSM 21 qui regroupe les fonctions de pré-régulation des tensions primaires à 28 Volts nominales fournies par deux lignes 26, 27 d'alimentation générale en courant continu de l'aérodyne, les autres modules 22 à 25 comportant un circuit d'alimentation secondaire constitué de convertisseurs de tension de faible coût, assurant la production de tensions d'alimentations adaptées à leurs propres besoins. En particulier, le module 21 assure les fonctions de limitation des surtensions, d'écrêtage des tensions transitoires liées à la foudre, de compensation des baisses de tension passagères, dans le but de délivrer aux autres modules 22 à 25 une tension pré-régulée. Il s'avère en effet que les tensions fournies par les alimentations générales d'un aérodyne sont soumises à de fortes variations, de 18 à 32 Volts, ces variations pouvant varier en transitoire de 12 à 48 Volts. Le module d'alimentation primaire PPSM 21 regroupe sur une seule carte électronique 34 un ensemble de composants relativement encombrants et coûteux pour fournir à plusieurs modules une tension pré-régulée présentant une faible plage de variations, par exemple entre 18 et 32 Volts, qui peut ensuite être adaptée par des convertisseurs bon marché intégrés dans chacun des modules 22 à 25, et capables de fournir les tensions variées utilisées par ces derniers.

Les autres modules 22 à 24, à l'exception du module de gestion 25 des données analogiques et discrètes, comprennent chacun une même carte à microprocesseur 30 et une carte d'extension spécifique 31 à 33, mais de structure voisine, assurant notamment les tâches d'entrée et sortie du module. Le module de gestion des données analogiques et discrètes 25 comprend également deux cartes 28, 29, mais celles-ci sont toutes les deux dédiées à la gestion des entrées et sorties et ne comportent pas de processeur.

Il est à noter que deux modules identiques dans les deux ensembles de traitement 1, 2 peuvent effectuer le même traitement en redondance ou des traitements complémentaires, selon la criticité des fonctions réalisées. Cette architecture offre donc de nombreuses possibilités d'adaptation et de configuration.

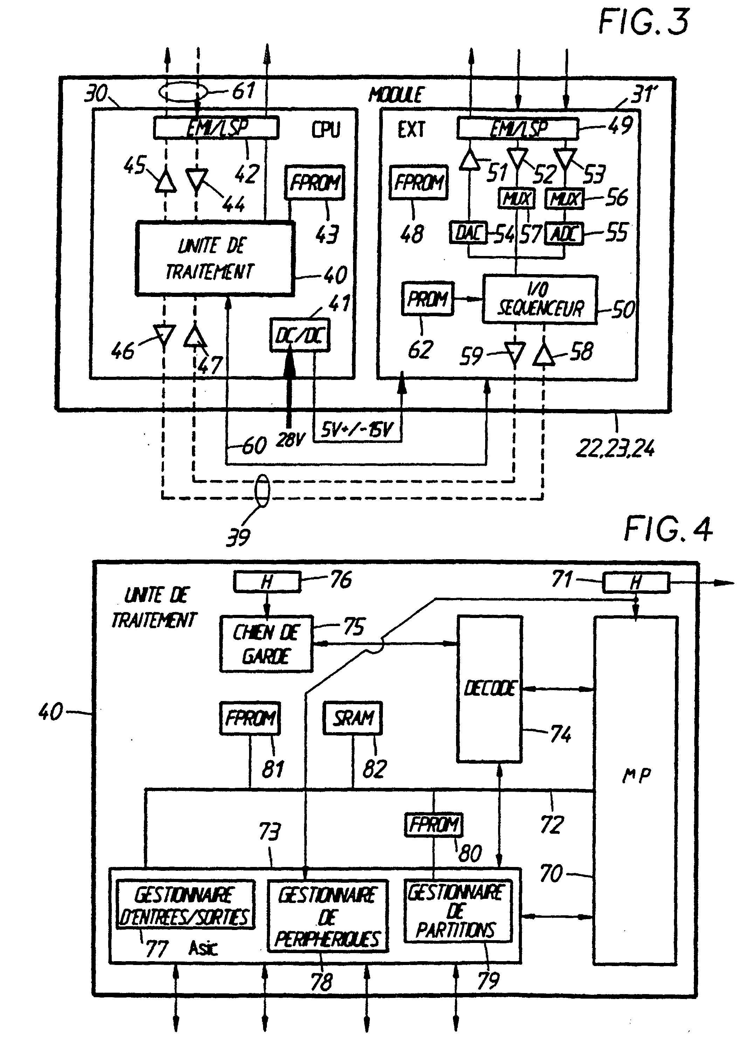

Sur la figure 3 qui représente un exemple de module 22, 23, 24 muni de moyens de calcul, la carte à microprocesseur 30 comprend :
- une alimentation secondaire 41 comprenant un convertisseur de tension continue qui reçoit une tension de 18 à 32 Volts pré-régulée, pour produire les tensions d'alimentation des différents composants de la carte, ainsi que de la carte d'extension associée 31',
- une unité de traitement 40 qui communique par l'intermédiaire de dispositifs de stockage temporaire et de mise en forme 46, 47 avec un bus numérique interne 39 à l'ensemble de traitement 1, 2, par exemple un bus "fond de panier" de type ARINC 429 qui assure la liaison, non seulement avec les autres modules de l'ensemble de traitement, mais aussi avec la carte d'extension associée 31', et
- une mémoire de maintenance 43 non volatile, par exemple de type FPROM ou EEPROM dans laquelle sont stockées en temps réel toutes les données nécessaires à la maintenance, en particulier, les résultats d'autotests et les données permettant de localiser des pannes éventuelles et d'en établir la cause.

Cette carte de traitement 30 regroupe également tous les interfaces d'entrées / sorties qui sont nécessaires à tous les modules de traitements pour communiquer directement avec l'extérieur des ensembles de traitement 1, 2. Ainsi, elle comprend une liaison numérique externe 61, par exemple de type ARINC 429, reliée à l'unité de traitement 40 par l'intermédiaire d'un circuit de protection 42 contre les radiations électromagnétiques et contre la foudre, et de dispositifs de stockage temporaire et de mise en forme 44, 45.

Par ailleurs, l'unité de traitement 40 est reliée à la carte d'extension 31' par une ligne série 60 permettant d'échanger avec celle-ci des données discrètes dites de servitude de fonctionnement.

Chaque carte d'extension 31' comprend un automate séquenceur programmable 50, par exemple constitué d'un circuit ASIC, qui est associé à une mémoire non volatile 62, par exemple de type PROM, contenant des séquences d'instructions consécutives et linéaires. Cet automate gère, selon les instructions reçues par exemple de la ligne série 60, le chargement de sa mémoire associée et l'exécution de différentes tâches qui lui sont affectées (par exemple, des acquisitions de données analogiques, la génération de signaux audibles, ...) et qui ne peuvent pas être effectuées par les interfaces génériques de la carte module de traitement 30.
A cet effet, l'automate 50 est relié au bus numérique "fond de panier" 39 par l'intermédiaire de dispositifs de stockage temporaire et de mise en forme 58, 59, ce qui lui permet notamment de communiquer avec l'unité de traitement 40. Il est également relié directement à l'extérieur de l'ensemble de traitement 1, 2 par exemple par l'intermédiaire d'un circuit de protection 49 contre la foudre et les émissions électromagnétiques, pour recevoir des données discrètes par l'intermédiaire d'un circuit d'adaptation et d'interface spécifique 52 et d'un multiplexeur 57, et des données analogiques grâce à un circuit d'adaptation et d'interface spécifique 53, un multiplexeur 56 et un convertisseur analogique /numérique 55, et pour émettre des données analogiques par l'intermédiaire d'un convertisseur numérique / analogique 54 et d'un circuit d'adaptation et d'interface spécifique 51.

Chaque carte d'extension 31' peut comprendre également une mémoire de maintenance non volatile, prévue dans un même but que la mémoire 43 de la carte de traitement 30. Cette mémoire de maintenance peut être gérée par la carte de traitement du module, ou encore par d'autres moyens prévus directement sur la carte d'extension 30'.

Les cartes 28 et 29 du module de gestion 25 des entrées et sorties analogiques et discrètes sont construites selon un schéma analogue à celui de la carte 31' qui vient d'être décrite. En particulier, ces cartes comprennent le circuit ASIC 50. Toutefois, l'une de ces deux cartes 28, 29 comprend en outre une alimentation secondaire du même type que le circuit d'alimentation 41, qui assure l'alimentation des deux cartes 28, 29 du module 25. Au moins l'une de ces deux cartes comprend une mémoire de maintenance non volatile.

Du point de vue matériel, cette architecture présente l'avantage d'utiliser un nombre réduit de cartes de base de même structure, à savoir des cartes de traitement 30, et des cartes d'extension 31 à 33 de structure sensiblement analogue à celle des cartes d'entrées / sorties 28, 29. Il en résulte des économies d'échelle importantes.

Il est à noter que dans les modules 22 à 25 constitués de deux cartes, celles-ci ne sont interconnectées que par le connecteur de fond de panier de la baie 1, 2, le simple enfichage d'une carte dans ce connecteur assurant sa connexion complète. Cette disposition permet de faciliter les opérations de maintenance et supprime les risques d'erreur de connexion lors de remplacements de cartes dans un module.

Sur la figure 4, l'unité de traitement 40 comprend un microprocesseur 70 cadencé par un horloge 71, et dont le fonctionnement est surveillé par un circuit "chien de garde" 75 qui cadencé par une autre horloge 76. Le microprocesseur 70 est relié par l'intermédiaire d'un bus d'adresse et de données 72 à une mémoire programme de type non volatile 81, et à une mémoire de données de type volatile 82, ainsi qu'à un circuit ASIC 73. Les adresses d'accès fournies par le microprocesseur 70 sont traitées par un décodeur d'adresses 74 avant d'être envoyées sur le bus 72.

Le circuit ASIC 73 comprend des moyens 77 pour gérer les entrées / sorties de l'unité de traitement 40, qui peuvent être de type numérique ARINC 429, discrètes, ou série, et fournit des services 78 de transfert rapide de données entre zones adressables par le microprocesseur 70, de comptage de temps, et des services de contrôle 79 des accès à l'espace adressable par le microprocesseur 70 en fonction de droits d'accès affectés aux différentes tâches exécutées par celui-ci, ces droits d'accès étant stockés dans une autre mémoire non volatile 80 adressée par le bus 72 et dont le port de données est relié au circuit ASIC 73.

Sur le plan logiciel, toutes les cartes 30 à microprocesseur identique comprennent un même logiciel d'exploitation assurant les fonctions communes de démarrage du microprocesseur, les fonctions d'initialisation et d'autotests de la carte, les fonctions de gestion temps réel de système multitâches, et comprenant des bibliothèques de fonctions communes utilisées par les applications exécutées par l'ensemble de traitement 1, 2. Ces dispositions permettent de réaliser des gains substantiels en termes de coûts de développement et de délais de réalisation d'applications.

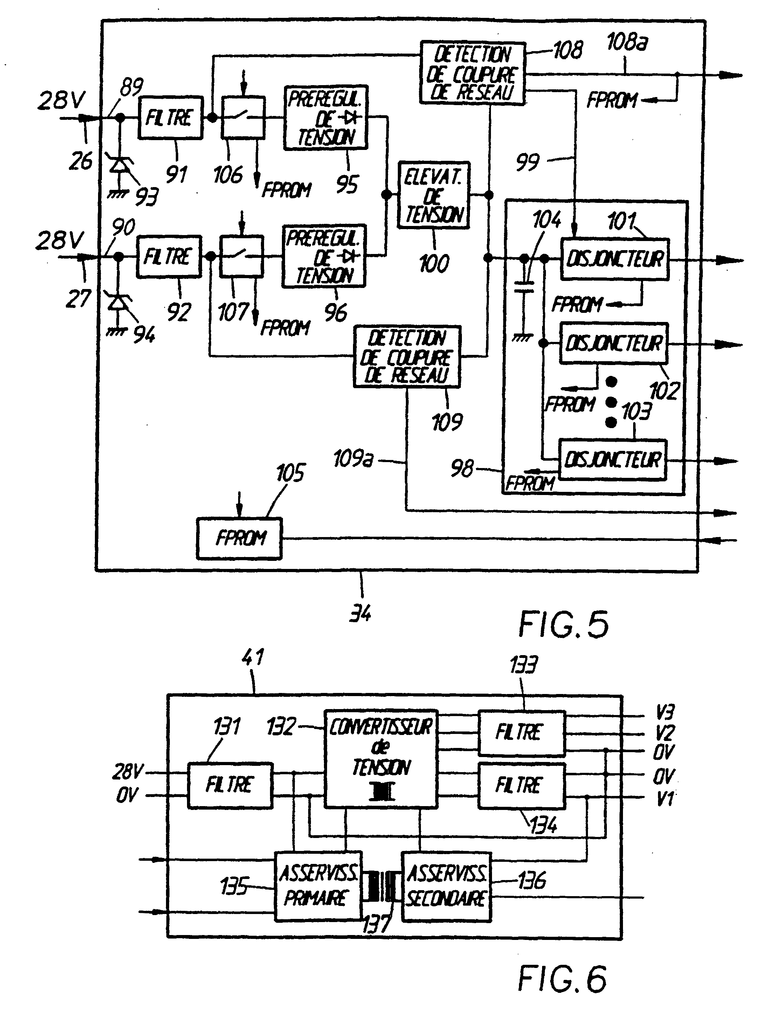

Sur la figure 5, la carte 34 d'un module d'alimentation primaire 21 comprend successivement en série, pour chaque ligne 89, 90 d'alimentation à 28 Volts de l'aérodyne appliquée en entrée :
- un dispositif d'écrêtage 93, 94, constitué par une diode Zener et/ou un dispositif similaire tel qu'une varistance, connecté en parallèle entre la ligne respective d'alimentation et la masse, ce dispositif permettant d'éliminer les impulsions supérieures à 80 Volts, par exemple dues à la foudre,
- un circuit de filtrage passe-bas 91, 92 relié à la sortie du dispositif d'écrêtage 93, 94,
- des moyens de commutation automatiques 106, 107 pour alimenter ou non le reste du circuit en fonction de la présence ou de l'absence de tension en entrée, ces moyens étant configurés de manière à donner la préférence à l'un des deux réseaux 89, 90 d'alimentation de l'aérodyne, lorsque ceux-ci sont tous les deux disponibles, et
- un circuit de pré-régulation de tension 95, 96 réalisant un écrêtage en tension et une limitation du courant en sortie du circuit de filtrage 91, 92.

La carte 34 du module d'alimentation primaire 21 comprend en outre un circuit régulateur / élévateur de tension 100 connecté aux deux circuits de pré-régulation de tension 95, 96 pour appliquer au reste du circuit une tension de 28 Volts pendant quelques dizaines de secondes, par exemple 30 secondes, lorsque la tension en entrée est descendue à 12 Volts minimum, et un circuit de distribution de courant 98 connecté à la sortie du circuit régulateur / élévateur de tension 100. Le circuit de distribution 98 comprend une réserve d'énergie 104 constituée par exemple par une batterie de condensateurs, et un ensemble de disjoncteurs électroniques 101 à 103 qui fournissent respectivement aux autres modules 22 à 25 de la baie 1, 2 une tension continue à 28 Volts pré-régulée.

Il est à noter que la réserve d'énergie 104 est disposée en sortie du circuit régulateur / élévateur de tension 100 qui lui applique donc une tension élevée et à peu près constante. Comme la charge d'un condensateur est proportionnelle à la tension appliquée entre ses bornes, l'énergie stockée dans la réserve d'énergie 104 reste donc à peu près constante et élevée quelque soit le niveau de la tension fournie par le réseau.
Grâce à ces dispositions, le module d'alimentation primaire 21 est capable de compenser des coupures de quelques dizaines de millisecondes (20 à 200 ms par exemple) en maintenant les alimentations vers les modules 22 à 25.

Les disjoncteurs 101à 103 sont conçus de manière à s'ouvrir automatiquement en cas de court-circuit en aval, et à se refermer automatiquement lorsqu'ils sont mis hors tension. Ils assurent ainsi une protection séparée du module d'alimentation primaire 21 contre les courts-circuits qui peuvent se produire au niveau des modules 22 à 25 ou des connexions entre ces derniers et les disjoncteurs, et donc garantissent la disponibilité de l'alimentation et la non propagation des pannes, en cas de court-circuit sur un module.

Les circuits de pré-régulation 95, 96 comprennent chacun une diode de blocage permettant d'éviter la décharge des condensateurs 104 vers les réseaux, en cas de coupure du circuit.

Grâce à la réserve d'énergie 104 et au dispositif régulateur / élévateur de tension 100, le module d'alimentation primaire 21 est capable de compenser des coupures de quelques dizaines de millisecondes (20 à 200 ms par exemple) en maintenant les alimentations vers les modules 22 à 25.

Par ailleurs, la carte 34 du module 21 comprend en outre deux dispositifs de détection de coupure de réseau 108, 109 respectivement connectés en parallèle entre la sortie des filtres 91, 92 et la sortie du circuit régulateur / élévateur de tension 100. Lorsque la durée de coupure des réseaux dépasse le temps de couverture de la réserve d'énergie 104, les dispositifs de détection de coupure de réseau 108, 109 indiquent aux modules 22 à 25, à l'aide des signaux 108a et 109a qu'il y aura perte totale d'alimentation dans un délai proche de quelques millisecondes (2 à 20 ms). L'apparition des signaux 108a et 109a déclenchent un processus de mémorisation en mémoire secourue par pile ou condensateur de certains paramètres de vol critiques. Le temps d'écriture dans la mémoire est de l'ordre de 2 à 20 ms, tandis que le temps de mémorisation nécessaire de ces paramètres est en général compris entre 200 ms et 5 s.

Certains disjoncteurs électroniques 101 à 103 peuvent aussi s'ouvrir à l'aide d'un signal 99 issu du détecteur de réseau principal 108 lors de la perte de celui-ci, et lorsque l'on ne veut pas alimenter un ou plusieurs modules 22 à 25 avec le réseau de secours, afin d'éviter une charge trop importante de celui-ci.

Par ailleurs, la carte 34 comprend également une mémoire de maintenance 105 non volatile, par exemple de type FPROM permettant de mémoriser tous les événements susceptibles de faciliter la maintenance de la carte, comme par exemple l'ouverture d'un disjoncteur 101 à 103 et les coupures de réseau ayant entraîné des changements d'état des commutateurs 106, 107. Le contenu de cette mémoire 105 est mis à jour par les modules 22 à 25 qui y ont accès en écriture et en lecture pour vérifier chaque écriture. Cette mémoire peut également être mise à jour par les détecteurs de coupure 108, 109, et par les disjoncteurs 101 à 103 et les dispositifs de commutation 106, 107, qui présentent à cet effet, une sortie binaire donnant l'état, respectivement, du disjoncteur ou du dispositif de commutation.

La carte 34 de ce module d'alimentation primaire 21 fournit aux autres modules 22 à 25 de l'équipement 1 une tension pré-régulée qui peut ensuite être adaptée par les autres modules au moyen de blocs d'alimentation secondaire intégrés 41, présentant une structure beaucoup plus simple et moins encombrante, et par conséquent, moins coûteuse que s'il avait fallu adapter directement les tensions fournies par chaque réseau de l'aérodyne aux besoins de chaque module.

Ainsi, sur la figure 6, chaque bloc d'alimentation secondaire 41 comprend un filtre d'entrée 131 recevant la tension de 28 Volts pré-régulée, permettant d'éliminer les hautes fréquences qui peuvent apparaître au niveau des lignes de connexion entre les disjoncteurs 101 à 103 et les blocs d'alimentation 41. La sortie du filtre d'entrée 131 est connectée à un convertisseur de tension continu 132 comprenant un bloc primaire et un bloc secondaire isolés galvaniquement par un transformateur d'impulsions. L'alimentation des modules est ainsi isolée galvaniquement du module d'alimentation primaire 21. Le convertisseur 132 est par exemple de type à découpage "Flyback" à commutation à 0 Volt. Le bloc secondaire permet de fournir les différentes tensions V1, V2, V3, nécessaires au module, par exemple 5 V et +/- 15 V, qui sont préalablement filtrées par des filtres de sortie 133, 134 permettant d'éliminer les hautes fréquences éventuellement introduites par le convertisseur à découpage 132.

Par ailleurs, le convertisseur 132 est asservi en tension par un circuit de commande comprenant un circuit primaire 135 recevant des signaux de commande, et un circuit secondaire 136 isolés fournissant des signaux de contrôle, ces deux circuits 135, 136 étant isolés galvaniquement par un transformateur d'impulsions 137. Le circuit de commande secondaire 136 effectue la mesure d'une des tensions en sortie des filtres 133, 134, par exemple la tension V1, pour générer un signal de commande qui est transmis au circuit primaire 135. Le circuit primaire 135 transforme ce signal en fonction d'une puissance de sortie maximum de consigne, en un second signal de commande qui est appliqué aux transistors de commutation du convertisseur à découpage 132. La régulation des autres tensions de sortie V2, V3, est obtenue grâce au couplage magnétique réalisé par le transformateur du convertisseur 132 et grâce à la symétrie des circuits de celui-ci. Un tel convertisseur ne nécessite aucune charge minimum au niveau de ses sorties.

En cas de panne, les différentes cartes des modules 21 à 25 peuvent être facilement déconnectées simplement en les retirant de la baie où elles sont enfichées. La localisation des pannes éventuelles est réalisée en connectant un outil de maintenance approprié au moyen du connecteur de la carte, cet outil étant muni de moyens pour lire et mettre à jour la mémoire de maintenance 43, 105 du module.

Comme précédemment mentionné, les cartes de traitement 30 des modules 22 à 24 sont identiques. Toutefois, les tâches exécutées par chacune de ces différentes cartes peuvent être de natures très différentes, de durées variables, et surtout, de niveaux de criticité très différents. Il est donc nécessaire de prendre des mesures particulières pour assurer le bon déroulement de ces tâches.
Ainsi, par exemple, le module IOP 24 assure les tâches suivantes :
- la concentration dans l'ensemble de traitement 1, 2, des données non critiques provenant des différents systèmes de l'aérodyne, à destination, en particulier, du système d'instrumentation électronique de la planche de bord,
- l'élaboration des paramètres et des logiques de contrôle issus et à destination de fonctions redondantes,
- la collecte et la mise en forme des données destinées à l'enregistreur de vol,
- la génération des alarmes destinées à l'équipage et l'activation de dispositifs d'alerte visuelle et sonore,
- la communication avec d'autres équipements, tels que le système avertisseur de la proximité du sol (GPWS), et
- le test du système et la localisation d'avaries, cette dernière tâche ayant un degré de criticité moindre que les autres.

Afin d'interdire qu'une fonction en perturbe une autre, et en particulier, qu'une fonction moins critique bloque l'exécution d'une fonction plus critique, le circuit ASIC 73 comprend :
- un circuit de gestion 77 des entrées / sorties de l'unité de traitement 40, qui peuvent être de type numérique ARINC 429, discrètes, ou série,
- un circuit de gestion de périphériques 78 comprenant des moyens de transfert rapide (DMA) de données entre zones adressables par le microprocesseur 70, et des moyens de comptage de temps et de génération d'interruptions cycliques en direction du microprocesseur 70, pour délimiter des tranches de temps cycliques, et
- un circuit de contrôle 79 des accès à l'espace adressable par le microprocesseur 70 en fonction de droits d'accès affectés aux différentes tâches exécutées par celui-ci, ces droits d'accès étant stockés dans une autre mémoire non volatile 80 adressée par le bus 72 et dont le port de données est relié au circuit ASIC 73.

Le circuit de contrôle des accès 79 comprend des moyens 79 pour effectuer le contrôle des plans d'adressage de l'espace adressable par le microprocesseur 70, cet espace comprenant les mémoires 81, 82 et des registres d'entrée et de sortie accessibles par le circuit de gestion des entrées/sorties 77,

Par ailleurs, la mémoire 80 est connectée aux bits de poids forts du bus d'adresse, ce qui permet d'associer des droits d'accès stockés dans la mémoire à chaque ensemble, par exemple de 512 octets, de l'espace adressable par le microprocesseur.

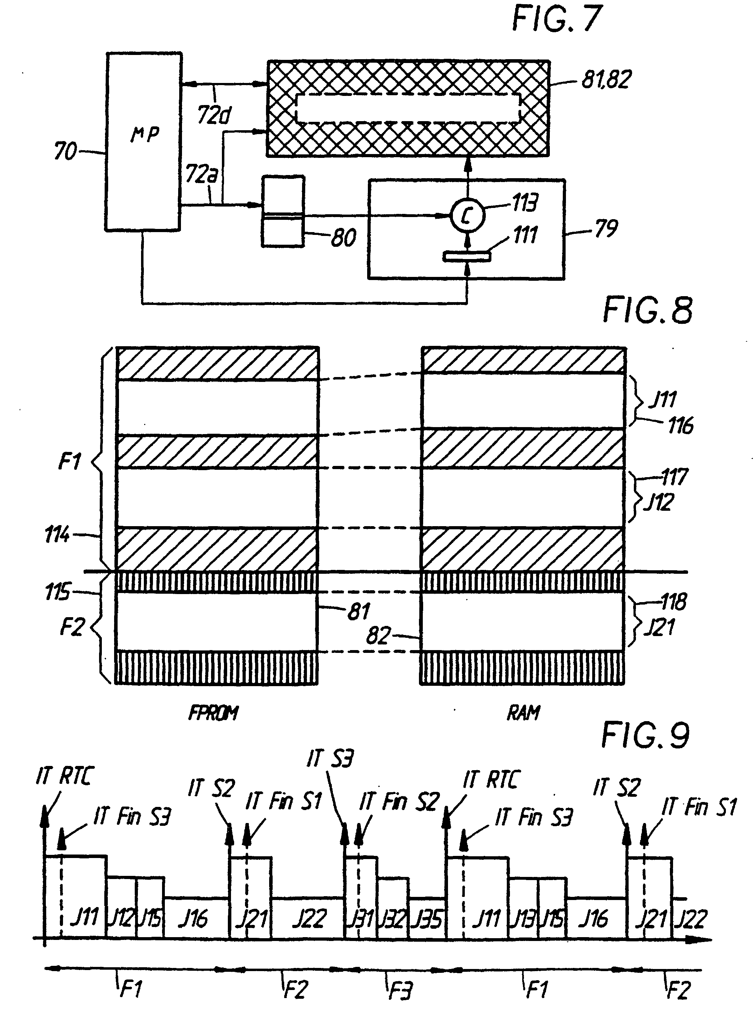

Tel que représenté sur la figure 7, le circuit de contrôle 79 des accès à l'espace adressable par le microprocesseur 70 comprennent un registre 111 contenant le droit d'accès autorisé correspondant à la tranche de temps cyclique en cours, mis à jour par le microprocesseur 70 au début de chaque nouvelle tranche de temps, marqué par une interruption. Ce circuit est connecté au bus de données de la mémoire non volatile 80 qui contient les droits d'accès de chaque zone de l'espace adressable par le microprocesseur 70.

Sur la figure 8, la mémoire contenant les programmes 81 et la mémoire contenant les données 82 sont divisées en partitions 114p, 115p, 114d, 115d, attribuées respectivement à deux fonctions distinctes F1, F2, les partitions 114p et 115p contenant respectivement le programme exécutable par le microprocesseur 70 permettant la réalisation des fonctions F1, F2, et les partitions 114d et 115d les données utilisées exclusivement, respectivement par F1, F2. Comme chaque fonction comprend plusieurs tâches J11, J12, J21, les partitions 114p, 115p, 114d, 115d sont à leur tour divisées en plusieurs zones 116p, 117p, 118p, 116d, 117d, 118d, chaque zone mémoire contenant le programme, ou selon le cas, étant utilisable pour stocker des données, par une tâche Jij de la fonction Fi correspondante.

Ainsi, l'espace adressable par le microprocesseur est structuré en partitions et en zones à l'intérieur d'une même partition, chaque zone étant associée à un droit d'accès.

Avantageusement, les zones de mémoire utilisables par chaque tâche cyclique sont séparées les unes des autres par des zones de mémoire non utilisées (zones hachurées montrées sur la figure 4), ce qui permet de rendre sans effet pour les autres fonctions certaines erreurs d'adressage.

Lorsque le microprocesseur 70 effectue un accès à une des mémoires 81, 82, à une adresse donnée, celle-ci est envoyée sur le bus d'adresse 72a à la fois vers la zone mémoire adressée dans l'espace adressable du microprocesseur 70, et vers la mémoire 80 qui fournit alors les droits d'accès de la zone adressée au service de contrôle 79. Le service de contrôle 79 comprend un comparateur 113 qui compare les droits d'accès provenant du registre 111 avec les droits d'accès lus dans la mémoire 80.
Si le comparateur détecte une différence, il interdit au microprocesseur 70 d'accéder à la zone mémoire adressée lorsqu'il s'agit d'un accès en écriture, et génère une interruption de violation d'accès à la mémoire, à destination du microprocesseur 70. Lorsqu'il s'agit d'un accès en lecture, il signale simplement que la lecture a été effectuée dans une zone interdite. Si les droits d'accès lus dans la mémoire 80 et ceux stockés dans le registre 111 coïncident, les données peuvent être échangées sur le bus de données 72d entre le microprocesseur et la zone mémoire.

Les mots de droit d'accès stockés dans la mémoire 80 peuvent comprendre chacun quatre champs, à savoir un champ 121 correspondant à un niveau de criticité, un champ 122 correspondant à un numéro de partition, un champ de protection en écriture 123, et un champ de protection en lecture 124.

Selon une variante de l'invention, le comparateur 113 peut autoriser en outre l'accès à une zone correspondant à la même fonction que celle de la tranche de temps en cours, et dont le niveau de droit d'accès est inférieur à celui de la tâche en cours, ceci afin d'instaurer une hiérarchie dans les droits d'accès lors de l'exécution des tâches d'une fonction.

Cette détection d'erreurs d'adressage permet de neutraliser les fautes en empêchant toute modification erronée de la mémoire ou accès erroné à un registre de sortie, et de stopper l'exécution de la tâche ou de la fonction en faute, en fonction de la gravité de la faute. De cette manière, on évite toute propagation de la faute aux autres fonctions exécutées par le microprocesseur, et aux autres parties de l'espace adressable.

D'après la figure 9, le procédé selon l'invention permet d'exécuter séparément par un même processeur plusieurs fonctions comprenant chacune plusieurs tâches, le temps d'utilisation du microprocesseur 70 étant divisé en périodes par une interruption IT RTC cyclique produite par une horloge temps réelle du circuit de gestion de périphériques 78, l'intervalle de temps entre deux interruptions IT RTC étant lui-même divisé en autant de tranches de temps que de fonctions F1, F2, F3 exécutées par le microprocesseur, par des interruptions ITS2, ITS3 espacées les unes des autres en fonction du temps que l'on souhaite attribuer à chaque fonction F1, F2, F3, ces interruptions étant également produites par le circuit de gestion 78.

La fonction F1 comprend six tâches J11 à J16, la tâche J11 étant exécutée à chaque interruption IT RTC marquant le début de la partition attribuée à F1, les tâches J12, J13 et J14 (non représentée) étant exécutées en alternance à la suite de la tâche J11, la tâche J15 étant exécutée à chaque partition attribuée à F1 à la suite de l'une des tâches J12, J13, J14, la tâche J16 étant exécutée en tâche de fond dans le temps restant de la partition attribuée à F1. De même, la fonction F2 comprend deux tâches J21 et J22, la tâche J21 étant exécutée à chaque interruption ITS2 marquant le début de la partition attribuée à F2, et la tâche J22 étant exécutée en tâche de fond dans le temps restant de la partition attribuée à F2. La fonction F3 comprend 5 tâches, à savoir la tâche J31 exécutée à la suite de chaque interruption ITS3, la tâche J32, et les tâches J33 et J34 (non représentées), exécutées en alternance à la suite de la tâche J31, et la tâche J35 exécutée en tâche de fond dans le temps restant dans la partition attribuée à F3.

Les interruptions IT RTC, ITS2 et ITS3 sont masquables, c'est-à-dire qu'elles sont reportées dans le cas où le microprocesseur exécute une séquence de code qui ne doit pas être interrompue. Pour éviter qu'une erreur se produisant durant une telle séquence de code ne perturbe l'exécution des autres fonctions, une interruption non masquable IT FinS3, IT FinS1, IT FinS2, est générée par le circuit de gestion des périphériques 78 juste après la fin normale de la tranche de temps correspondante, cette interruption étant systématiquement désactivée par le microprocesseur 70 à la fin de l'exécution de toutes les tâches de chaque cycle.
De cette manière, en fonctionnement normal, cette interruption n'apparaît pas, mais si l'exécution d'une fonction F1, F2, F3 pour un cycle donné dépasse la durée du cycle, cette interruption apparaît, ce qui permet d'éviter dans ce cas que l'activation de la fonction au cycle suivant soit retardée.

Le microprocesseur 70 a accès à une table stockée en mémoire 81 décrivant l'ordonnancement des tâches à chaque cycle délimité par les interruptions IT RTC, ITS2 et ITS3, et les droits d'accès attribués à chaque tâche. Au lancement de la chaque tâche, le microprocesseur met à jour le registre 111 avec le droit d'accès attribué à la tâche dans cette table.
Par ailleurs, on peut prévoir d'attribuer dans cette table, un temps minimum et un temps maximum à l'exécution de chaque tâche. Le processeur peut alors accéder à un compteur de temps compris dans le circuit de gestion des périphériques 78 au début et à la fin de chaque tâche et contrôler que le temps d'exécution ainsi mesuré se situe entre les temps minimum et maximum. Si cela n'est pas le cas, il appelle alors un gestionnaire d'erreur logiciel pour prendre en compte l'erreur et éventuellement stopper l'exécution ultérieure de la tâche ou de la fonction concernée de manière à neutraliser les effets de l'erreur.

Afin d'augmenter encore la sécurité de fonctionnement apportée par la structuration de l'espace adressable par le microprocesseur, les zones non utilisées des mémoires 81, 82 peuvent être remplies avec du code exécutable par le microprocesseur 70 qui, s'il venait à être exécuté par le microprocesseur, provoquerait par exemple son arrêt ou son blocage, et ainsi, un dépassement du temps maximum attribué à la tâche.

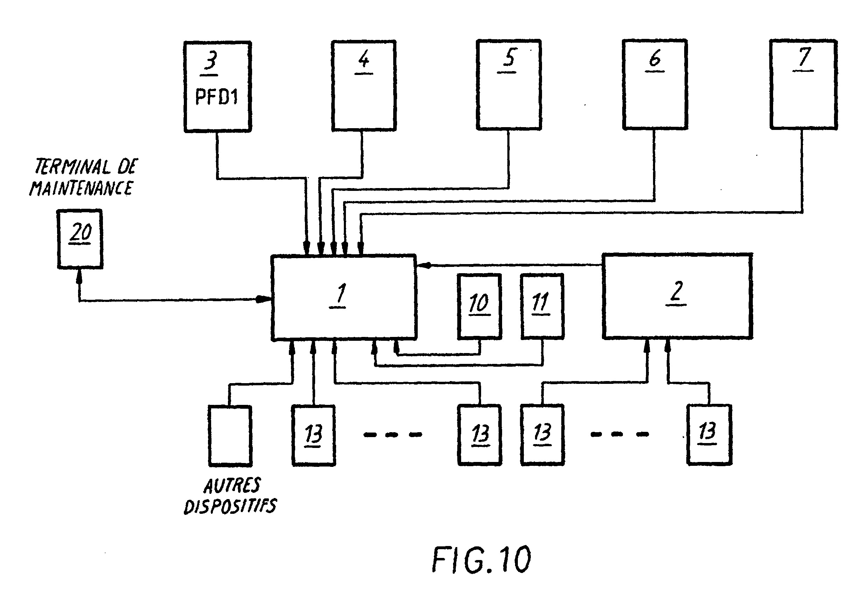

La figure 10 montre l'organisation de la maintenance des différents éléments de l'équipement électronique de pilotage de processus industriel schématisé à la figure 1. Les différents dispositifs de visualisation critique 3 à 7, le réceptacle de l'ensemble de traitement 2, les dispositifs de mesure des paramètres des moteurs 10, 11 et les équipements périphériques 13 engendrant des données non critiques sont reliés par des bus de maintenance au réceptacle de l'ensemble de traitement 1 qui renferme une centrale de maintenance reliée par un bus de communication à un terminal de maintenance 20 comportant un dispositif de visualisation des états de fonctionnement des différents éléments de l'équipement électronique de pilotage et un dispositif d'enregistrement, en vue d'une exploitation ultérieure.

## Revendications

1. Architecture modulaire d'équipements électroniques pour le pilotage d'un processus industriel, comprenant, d'une part, des réceptacles (1, 2) contenant des modules de concentration de données (24, 25) et des modules de traitements (22 à 24) alimentés en énergie par des modules d'alimentation (21), et d'autre part, des dispositifs d'affichage critique (3 à 7), l'ensemble étant interconnecté par l'intermédiaire de moyens de transmission de données à des capteurs critiques (8 à 11), des capteurs non critiques (13) et des actionneurs (12), **caractérisée en ce que** les capteurs critiques (8 à 11) transmettent directement leurs informations critiques aux dispositifs d'affichage critique (3 à 7) d'une part, et d'autre part aux modules de concentration et de traitement (24, 25) des réceptacles (1, 2), les modules de concentration (24, 25) élaborant, à partir des données des capteurs critiques (8 à 11) et non critiques (13), des données non critiques à destination des dispositifs d'affichage (3 à 7) et des modules de traitement (22 à 24) par l'intermédiaire d'un bus numérique série multi-récepteur (18, 19), les modules de traitement élaborant des ordres à destination des actionneurs (12) à partir des données des capteurs critiques (8 à 11) et des données non critiques issues des modules de concentration (24, 25).

2. Architecture modulaire d'équipements électroniques selon la revendication 1, **caractérisée en ce que** les dispositifs d'affichage (3 à 7) comprennent des moyens de traitement pour assurer l'interprétation et la visualisation des données qui leur sont transmises en provenance des capteurs critiques (8 à 11) et non critiques (13).

3. Architecture modulaire d'équipements électroniques selon la revendication 1 ou 2, **caractérisée en ce que** chaque module de traitement (22 à 24) et de concentration des données comprend une carte de traitement (30) identique, munie d'un processeur, et une carte d'entrée / sortie (31, 31', 32, 33) assurant la connexion de la carte de traitement (30) avec les entrées et les sorties directes du module (21 à 24), la carte de traitement comprenant une mémoire (81) dans laquelle est chargé le programme permettant de piloter le processeur (70) afin d'assurer la fonction du module.

4. Architecture modulaire d'équipements électroniques selon l'une des revendications précédentes, **caractérisée en ce que** les modules de traitement (22 à 25) et de concentration de données sont rassemblés dans une baie (1, 2) comprenant un module d'alimentation primaire (21) assurant la pré-régulation de tensions primaires alimentant la baie et présentant une plage de variations importante, pour fournir des tensions primaires pré-régulées présentant une faible plage de variations, chaque module (22 à 25) de traitement et de concentration de données de la baie comprenant un dispositif convertisseur (41) de tension continue recevant les tensions primaires pré-régulées et fournissant au module (22 à 25) les tensions qui lui sont nécessaires.

5. Architecture modulaire d'équipements électroniques selon la revendication 4, **caractérisée en ce que** le module d'alimentation primaire (21) comprend des moyens de filtrage (91, 92) et d'écrêtage (93, 94) des surtensions, et des moyens compensation (100) des baisses de tension de courte durée connectés à une réserve d'énergie (104).

6. Architecture modulaire d'équipements électroniques selon la revendication 4 ou 5, **caractérisée en ce que** le module d'alimentation primaire (21) comprend en outre un disjoncteur électronique (101 à 103) de protection contre les courts-circuits par module (22 à 25) à alimenter de la baie (1, 2), ce disjoncteur étant connecté au dispositif convertisseur (41) du module de la baie pour fournir une des tensions primaires pré-régulées à celui-ci.

7. Architecture modulaire d'équipements électroniques selon l'une des revendications 3 à 6, **caractérisée en ce que** chaque module (21 à 25) comprend une mémoire de maintenance (43, 105) non volatile dans laquelle sont mémorisés les résultats des autotests et tous les événements susceptibles d'aider à la maintenance du module.

8. Architecture modulaire d'équipements électroniques selon l'une des revendications 3 à 7, **caractérisée en ce que** chaque carte de traitement (22 à 24) comporte un dispositif (73) comprenant:
- des moyens (79) pour diviser l'espace adressable par le microprocesseur en partitions adressables et en zones adressables, et pour attribuer à chaque fonction et chaque tâche exécutée par le microprocesseur, respectivement au moins une partition adressable et au moins une zone adressable,
- des moyens (79) pour diviser le temps d'utilisation du processeur en tranches de temps cycliques, et pour attribuer ces tranches de temps respectivement à l'exécution de chacune des fonctions,
- des moyens pour activer successivement dans un ordre prédéfini les tâches de chaque fonction pendant les tranches de temps attribuées à la fonction,
- des moyens pour mettre à jour et stocker (111) les droits d'accès correspondant à la tâche en cours d'exécution, et des moyens (113) pour contrôler lors de chaque accès à une zone adressable que les droits d'accès attribués à la tâche en cours correspondent à ceux de la zone adressée.

9. Architecture modulaire d'équipements électroniques selon l'une des revendications 3 à 8, **caractérisée en ce que** les parties de mémoire utilisables par chaque tâche exécutée par le processeur sont séparées par des zones non utilisées.

10. Architecture modulaire d'équipements électroniques selon la revendication 9, **caractérisée en ce que** les zones non utilisées de la mémoire de données et de programme (81, 82) sont remplies avec du code exécutable par le processeur (70) permettant la signalisation d'une erreur d'accès à la mémoire, par arrêt ou blocage du processeur.

11. Architecture modulaire d'équipements électroniques selon l'une des revendications 3 à 10, **caractérisée en ce que** toutes les cartes de traitement (22 à 24) mémorisent un même logiciel d'exploitation comprenant les fonctions d'initialisation et d'autotests de la carte, les fonctions de gestion temps réel de système multitâche, et les bibliothèques de fonctions communes à tous les modules de traitement.

12. Architecture modulaire d'équipements électroniques selon la revendication 1, **caractérisée en ce qu**elle comporte une centrale de maintenance qui est disposée dans l'un (1) des réceptacles et reliée à l'autre réceptacle (2), aux différents dispositifs d'affichage (3 à 7), aux dispositifs de mesure des paramètres des moteurs (10, 11) et aux capteurs non critiques (13) par des bus de maintenance, et un terminal de maintenance (20) relié à la centrale de maintenance par un bus de communication.

## Patentansprüche

1. Modulare Anlage aus elektronischen Geräten für die Steuerung eines industriellen Prozesses, die einerseits Einschübe (1, 2), die Moduln (24, 25) zur Datenkonzentration sowie Verarbeitungsmoduln (22 bis 24) enthalten, welche von Stromversorgungsmoduln (21) gespeist werden, und die andrerseits Vorrichtungen (3 bis 7) zur Anzeige kritischer Daten aufweist, wobei die Anlage über Datenübertragungsmittel mit Meßsonden (8 bis 11) für kritische Werte, mit Meßsonden (13) für nichtkritische Werte und mit Wirkgliedern (12) verbunden ist, **dadurch gekennzeichnet, daß** die Meßsonden (8 bis 11) für kritische Werte unmittelbar ihre kritischen Informationen einerseits an die Vorrichtungen (3 bis 7) zur Anzeige kritischer Daten und andrerseits an die Konzentrations- und Bearbeitungsmoduln (24, 25) der Einschübe (1, 2) übermitteln, wobei die Konzentrationsmoduln (24, 25) ausgehend von den Daten der Meßsonden (8 bis 11) für kritische Werte und der Sonden (13) für nichtkritische Werte nichtkritische Daten für die Anzeigevorrichtungen (3 bis 7) und die Verarbeitungsmoduln (22 bis 24) über einen digitalen Serienbus (18, 19) für mehrere Empfänger erarbeiten, während die Verarbeitungsmoduln Befehle für die Wirkglieder (12) ausgehend von Daten der Meßsonden (8 bis 11) für kritische Werte und den Meßsonden für nichtkritische Werte aus den Konzentrationsmoduln (24, 25) erarbeiten.

2. Modulare Anlage aus elektronischen Geräten nach Anspruch 1, **dadurch gekennzeichnet, daß** die Anzeigevorrichtungen (3 bis 7) Verarbeitungsmittel enthalten, um die Interpretation und die Anzeige der Daten zu gewährleisten, die ihnen von den Meßsonden (8 bis 11; 13) für kritische und nichtkritische Werte übermittelt werden.

3. Modulare Anlage aus elektronischen Geräten nach Anspruch 1 oder 2, **dadurch gekennzeichnet, daß** jeder Modul (22 bis 24) zur Verarbeitung und zur Konzentration der Daten eine identische Verarbeitungskarte (30) mit einem Prozessor und eine Eingangs/Ausgangskarte (31, 31', 32, 33) enthält, die die Verbindung der Verarbeitungskarte mit den Eingängen und direkten Ausgängen des Moduls (21 bis 24) gewährleistet, wobei die Verarbeitungskarte einen Speicher (81) enthält, in den das Programm zur Steuerung des Prozessors (70) geladen wird, um die Funktion des Moduls zu gewährleisten.

4. Modulare Anlage aus elektronischen Geräten nach einem der vorstehenden Ansprüche, **dadurch gekennzeichnet, daß** die Moduln (22 bis 25) zur Verarbeitung und zur Konzentration von Daten in einem Einschub (1, 2) zusammengefaßt sind, der einen primären Stromversorgungsmodul (21) enthält, welcher primäre Spannungen, die dem Einschub zugeführt werden und erheblichen Spannungsschwankungen unterworfen sind, einer Vor-Stabilisierung unterwirft, sodaß er vor-stabilisierte Primärspannungen mit nur noch geringen Spannungsschwankungen liefert, wobei jeder Modul (22 bis 25) zur Verarbeitung und Konzentration von Daten des Einschubs eine Gleichstrom-Wandlervorrichtung (41) aufweist, die die vor-stabilisierten Primärspannungen empfängt und dem Modul (22 bis 25) die für ihn erforderlichen Spannungen liefert.

5. Modulare Anlage aus elektronischen Geräten nach Anspruch 4, **dadurch gekennzeichnet, daß** der primäre Stromversorgungsmodul (21) Filtermittel (91, 92) und Begrenzungsmittel (93, 94) gegen Überspannungen sowie Kompensationsmittel (100) für Spannungsabsenkungen kurzer Dauer aufweist, welche an einen Energiespeicher (104) angeschlossen sind.

6. Modulare Anlage aus elektronischen Geräten nach Anspruch 4 oder 5, **dadurch gekennzeichnet, daß** der primäre Stromversorgungsmodul (21) außerdem einen elektronischen Schalter (101 bis 103) zum Schutz gegen Kurzschlüsse für jeden zu speisenden Moduln (22 bis 25) des Einschubs (1, 2) enthält, wobei dieser Schalter an die Wandlervorrichtung (41) des Moduls im Einschub angeschlossen ist, um ihm eine der vor-stabilisierten Primärspannungen zu liefern.

7. Modulare Anlage aus elektronischen Geräten nach einem der Ansprüche 3 bis 6, **dadurch gekennzeichnet, daß** jeder Modul (21 bis 25) einen nichtflüchtigen Wartungsspeicher (43, 105) enthält, in dem die Ergebnisse der Eigentests und alle Ergebnisse gespeichert sind, die bei der Wartung des Motors hilfreich sein können.

8. Modulare Anlage aus elektronischen Geräten nach einem der Ansprüche 3 bis 7, **dadurch gekennzeichnet, daß** jede Verarbeitungskarte (22 bis 24) eine Vorrichtung (73) aufweist, die enthält:
- Mittel (79), um den vom Mikroprozessor adressierbaren Speicherraum in adressierbare Bereiche und adressierbare Zonen aufzuteilen und um jeder Funktion und jeder vom Mikroprozessor ausgeführten Aufgabe mindestens einen adressierbaren Speicherbereich beziehungsweise mindestens eine adressierbare Speicherzone zuzuweisen,
- Mittel (79), um die Belegungzeit des Prozessors in zyklisch wiederkehrende Zeitabschnitte zu unterteilen und um diese Zeitabschnitte je der Ausführung einer Funktion zuzuweisen,
- Mittel, um nacheinander in einer vorbestimmten Reihenfolge die Aufgaben jeder Funktion während der der Funktion zugewiesenen Zeitabschnitte zu aktivieren,
- Mittel (111), um die Zugriffsrechte entsprechend der gerade ausgeführten Aufgabe zu aktualisieren, und Mittel (113), um bei jedem Zugriff zu einer adressierbaren Zone zu prüfen, ob die der gerade ausgeführten Funktion zugeteilten Zugriffsrechte denen der adressierten Zone entsprechen.

9. Modulare Anlage aus elektronischen Geräten nach einem der Ansprüche 3 bis 8, **dadurch gekennzeichnet, daß** die Speicherbereiche, die durch eine vom Prozessor ausgeführte Aufgabe benutzt werden können, durch nicht benutzte Speicherzonen voneinander getrennt sind.

10. Modulare Anlage aus elektronischen Geräten nach Anspruch 9, **dadurch gekennzeichnet, daß** die nicht benutzten Zonen des Daten- und Programmspeichers (81, 82) mit einem vom Prozessor (70) ausführbaren Kode gefüllt sind und so die Signalisierung eines Zugriffsfehlers zum Speicher durch Anhalten oder Blockieren des Prozessors erlauben.

11. Modulare Anlage aus elektronischen Geräten nach einem der Ansprüche 3 bis 10, **dadurch gekennzeichnet, daß** alle Verarbeitungskarten (22 bis 24) eine gleiche Betriebssoftware speichern, die die Initialisierungs- und die Eigentestfunktionen der Karte, die Funktionen der Echtzeit-Koordinierung des Multifunktionssystems und die Bibliotheken der allen Verarbeitungsfunktionen gemeinsamen Funktionen speichern.

12. Modulare Anlage aus elektronischen Geräten nach Anspruch 1, **dadurch gekennzeichnet, daß** sie eine Wartungszentrale aufweist, die in einem der Einschübe (1) untergebracht und an den anderen Einschub (2), an die verschiedenen Anzeigevorrichtungen (3 bis 7), an die Vorrichtungen (10, 11) zur Messung der Motorparameter und an die Meßsonden (13) für nichtkritische Werte über Wartungsbusleitungen angeschlossen ist, und daß sie ein Wartungsterminal (20) aufweist, das an die Wartungszentrale über einen Nachrichtenbus angeschlossen ist.

## Claims

1. Modular architecture of items of electronic equipment for the control of an industrial process, comprising, on the one hand, receptacles (1, 2) containing data-concentration modules (24, 25) and processing modules (22 to 24) supplied with energy by power supply modules (21), and, on the other hand, critical display devices (3 to 7), the assembly being interconnected via data transmission means to critical sensors (8 to 11), noncritical sensors (13) and actuators (12), **characterized in that** the critical sensors (8 to 11) transmit their critical information directly to the critical display devices (3 to 7) on the one hand, and to the concentration and processing modules (24, 25) of the receptacles (1, 2) on the other hand, the concentration modules (24, 25), on the basis of the data from the critical (8 to 11) and noncritical (13) sensors, deriving noncritical data intended for the display devices (3 to 7) and for the processing modules (22 to 24) via a multi-receiver serial digital bus (18, 19), the processing modules deriving commands intended for the actuators (12) on the basis of the data from the critical sensors (8 to 11) and of the noncritical data output by the concentration modules (24, 25).

2. Modular architecture of items of electronic equipment according to Claim 1, **characterized in that** the display devices (3 to 7) comprise processing means for interpreting and visually displaying the data which are transmitted to them originating from the critical (8 to 11) and noncritical (13) sensors.

3. Modular architecture of items of electronic equipment according to Claim 1 or 2, **characterized in that** each processing (22 to 24) and data-concentration module comprises an identical processing card (30), equipped with a processor, and an input/output card (31, 31', 32, 33) providing the connection between the processing card (30) and the direct inputs and outputs of the module (21 to 24), the processing card comprising a memory (81) into which is loaded the program making it possible to control the processor (70) so as to perform the function of the module.

4. Modular architecture of items of electronic equipment according to one of the preceding claims, **characterized in that** the processing (22 to 25) and data-concentration modules are brought together in a rack (1, 2) comprising a primary power supply module (21) performing pre-regulation of primary voltages supplying the rack and exhibiting a wide range of variation, in order to supply pre-regulated primary voltages exhibiting a small range of variation, each processing and data-concentration module (22 to 25) of the rack including a DC voltage converter device (41) receiving the pre-regulated primary voltages and supplying the module (22 to 25) with the voltages which it needs.

5. Modular architecture of items of electronic equipment according to Claim 4, **characterized in that** the primary power supply module (21) comprises means for filtering (91, 92) and clipping (93, 94) of overvoltages, and means (100) compensating for short-duration voltage drops, which are connected to an energy reserve (104).

6. Modular architecture of items of electronic equipment according to Claim 4 or 5, **characterized in that** the primary power supply module (21) further comprises one electronic circuit breaker (101 to 103) for protection against short-circuits per module (22 to 25) to be supplied of the rack (1, 2), this circuit breaker being connected to the converter device (41) of the module of the rack in order to supply it with one of the pre-regulated primary voltages.

7. Modular architecture of items of electronic equipment according to one of Claims 3 to 6, **characterized in that** each module (21 to 25) comprises a non-volatile maintenance memory (43, 105) in which are stored the results of the self-tests and all the events likely to assist with maintenance of the module.

8. Modular architecture of items of electronic equipment according to one of Claims 3 to 7, **characterized in that** each processing card (22 to 24) includes a device (73) comprising:
- means (79) for dividing the space addressable by the microprocessor into addressable partitions and into addressable areas, and for attributing to each function and each task performed by the microprocessor at least one addressable partition and at least one addressable area respectively,
- means (79) for dividing the utilization time of the processor into cyclic time slices, and for allocating these time slices respectively to the running of each of the functions,
- means for successively activating the tasks of each function, in a pre-defined order, during the time slices allocated to the function,
- means (111) for updating and storing the access rights corresponding to the task being performed, and means (113) for checking, upon each access to an addressable area, that the access rights attributed to the current task correspond to those of the area addressed.

9. Modular architecture of items of electronic equipment according to one of Claims 3 to 8, **characterized in that** the parts of the memory which can be used by each task performed by the processor are separated by unused areas.

10. Modular architecture of items of electronic equipment according to Claim 9, **characterized in that** the unused areas of the program and data memory (81, 82) are filled with code which can be executed by the processor (70) allowing a memory-access error to be signalled, by stopping or blocking of the processor.

11. Modular architecture of items of electronic equipment according to one of Claims 3 to 10, **characterized in that** all the processing cards (22 to 24) store in memory the same operating software comprising the functions of initialization and self-test of the card, the functions of real-time management of a multi-task system, and the libraries of functions common to all the processing modules.

12. Modular architecture of items of electronic equipment according to Claim 1, **characterized in that** it includes a maintenance unit which is arranged in one (1) of the receptacles and linked to the other receptacle (2), to the various display devices (3 to 7), to the engine-parameter measuring devices (10, 11) and to the noncritical sensors (13) by maintenance buses, and a maintenance terminal (20) linked to the maintenance unit by a communications bus.
